**Europäisches Patentamt**

**European Patent Office**

**Office européen des brevets**

(19)

(11) Numéro de publication: **0 228 318**
**B1**

## (12) FASCICULE DE BREVET EUROPEEN

(45) Date de publication du fascicule du brevet:
12.07.89

(51) Int. Cl.⁴: **H01J 3/02,** H01J 33/00,
H01S 3/097

(21) Numéro de dépôt: 86402529.1

(22) Date de dépôt: 13.11.86

(54) Canon à électrons opérant par émission secondaire sous bombardement ionique.

(30) Priorité: 29.11.85 FR 8517724

(43) Date de publication de la demande:
08.07.87 Bulletin 87/28

(45) Mention de la délivrance du brevet:
12.07.89 Bulletin 89/28

(84) Etats contractants désignés:
DE GB IT

(56) Documents cités:
FR-A- 2 204 882
US-A- 3 970 892

THE JOURNAL OF VACUUM SCIENCE AND
TECHNOLOGY,
vol. 12, no. 6, novembre/décembre 1975, pages 1197-
1199, American Vacuum Society, New York, US; D.
PIGACHE et al.: "Secondary emission electron gun for
high pressure molecular lasers"
REVIEW OF SCIENTIFIC INSTRUMENTS,
vol. 46, no. 9, septembre 1975, pages 1158-1160, American Institute of Physics, New York, US; J.R. BAYLESS:
"Plasma-cathode electron gun"

(73) Titulaire: **Office National d'Etudes et de Recherches
Aérospatiales (O.N.E.R.A.), 29 Avenue de la Division
Leclerc, F-92320 Châtillon-sous-Bagneux(FR)**

(72) Inventeur: **Pigache, Daniel, 4, sentier de la Batterie de
l'Yvette, F-91120 Palaiseau(FR)**
Inventeur: **Danel, François, 21, avenue Jeanne d'Arc,
F-38000 Grenoble(FR)**

(74) Mandataire: **Plaçais, Jean-Yves et al, Cabinet
Netter 40, rue Vignon, F-75009 Paris(FR)**

ACTORUM AG

## Description

La présente invention concerne le domaine technique des canons à électrons, en particulier des canons à électrons de puissance destinés, notamment, au traitement de matériaux par irradiation.

Dans son Brevet français FR-A 2 204 882, le Demandeur a proposé un canon à électrons qui comprend, dans une enceinte :
- une chambre d'ionisation, contenant un gaz à ioniser sous faible pression et des moyens propres à la création d'ions positifs de ce gaz, et dont les parois définissent une fenêtre de sortie transparente aux électrons et, à l'opposé, une grille conductrice, dite grille d'extraction, portée à un potentiel voisin de celui de la fenêtre de sortie;
- une chambre à haute tension, qui communique avec la chambre d'ionisation par la grille d'extraction, et, logée en regard de celle-ci, une cathode froide portée à une haute tension négative par rapport à la grille d'extraction et à la fenêtre de sortie.

La cathode est soumise au bombardement d'ions provenant de la chambre d'ionisation, à travers la grille d'extrac tion, et émet des électrons secondaires qui franchissent, en sens inverse des ions, la grille d'extraction, puis traversent la chambre d'ionisation, et sortent enfin par ladite fenêtre. Ce brevet antérieur visait principalement une application du canon à électrons dans des lasers à gaz à excitation électronique, et aussi dans des générateurs magnéto-hydrodynamiques.

La présente invention vient perfectionner le canon à électrons décrit antérieurement.

Elle a tout d'abord pour but d'améliorer le rendement de ce canon à électrons, c'est-à-dire du rapport du courant transporté par le faisceau d'électrons (au niveau de l'utilisation) au courant total fourni par l'alimentation haute tension du canon.

L'invention a également pour but de permettre une augmentation de la tension d'accélération du canon, c'est-à-dire de l'énergie finalement communiquée aux électrons.

De façon assez inattendue, il s'est avéré possible d'augmenter le rendement en associant à la grille d'extraction un masque qui s'oppose partiellement au passage des ions et, en sens inverse, à celui des électrons. Il est alors souhaitable que la fenêtre de sortie comprenne aussi une grille formant un masque, dont la configuration est homologue de celle du masque que constitue la grille d'extraction, l'homologie s'entendant compte-tenu de la géométrie du champ électrique dans la chambre à haute tension. De cette manière, les électrons secondaires créés par des ions qui ont traversé la grille d'extraction repassent pratiquement tous par celle-ci et par la fenêtre de sortie.

Pour beaucoup d'applications, il est avantageux que les surfaces de la partie active de la cathode à haute tension, de la grille d'extraction, et de la grille de la fenêtre de sortie soient sensiblement parallèles, de préférence également sensiblement planes, les lignes de champ électrique étant pour leur part sensiblement rectilignes.

Dans ce cas, les projections normales, sur la cathode de haute tension, des trous de la grille d'extraction et de la grille de la fenêtre de sortie sont sensiblement homothétiques l'une de l'autre. Ces mêmes projections sont sensiblement superposables dans certaines formes de réalisations. Dans d'autres réalisations, les projections relatives à la grille de la fenêtre de sortie sont incluses dans celles relatives à la grille d'extraction.

Les électrons secondaires ayant une énergie cinétique initiale faible par rapport à l'énergie d'accélération mais suffisante dans certains cas, pour que les composantes transversales de leur vitesse conduisent une partie des électrons à heurter la grille d'accélération, il peut être avantageux de refocaliser les électrons émis en donnant à la cathode une forme appropriée.

Cependant, l'effet de masquage selon l'invention peut également être obtenu dans des configurations où les surfaces, parallèles (mais éventuellement curvilignes) de la grille d'extraction et de la grille de la fenêtre de sortie sont inclinées par rapport à la cathode à haute tension. La forme de ces grilles et la géométrie du champ électrique sont alors telles que les électrons secondaires peuvent repasser tous par la grille d'extraction et la grille de la fenêtre de sortie, éventuellement, au moins en partie, par des trous différents de ceux qu'ont traversé les ions.

A cet effet de masquage. il est avantageux d'ajouter un effet de focalisation. Pour cela, le canon à électrons comporte des moyens, comprenant la grille d'extraction pour focaliser les ions sur la cathode à haute tension, tandis que les trajectoires en sens inverse des électrons secondaires, à haute énergie, sont peu modifiées par le champ électrique de focalisation.

Dans ce cas, le taux de trous de la grille d'extraction est proche de l'unité, c'est-à-dire que cette grille est par exemple constituée de lames minces dont la direction en largeur est sensiblement perpendiculaire à la cathode de haute tension.

Mais le taux de trous de la grille d'extraction peut aussi être de l'ordre de 0,5.

Dans un mode de réalisation plus particulier, la grille d'extraction comprend un écran finement percé, tel qu'une grille tissée ou une feuille métallique mince percée de petits trous multiples, écran qui est doublé d'un masque constitué d'une plaque percée de trous nettement plus grands.

Il est encore possible, même si l'on recherche l'effet de focalisation, que la grille d'extraction soit constituée d'une plaque épaisse percée de trous larges.

Pour les applications au traitement de matériaux par irradiation, il peut être avantageux que la direction générale des lames ou autres organes de masquage qui existent tant dans la grille d'extraction que dans la fenêtre de sortie soit en biais par rapport au sens de défilement du matériau à traiter.

De son côté, la grille de la fenêtre de sortie peut être constituée d'une plaque percée de trous de taille réduite, et servir de support à une feuille conductrice très mince. Les barreaux de la grille support peuvent être creux, pour être traversés par un fluide de refroidissement.

. Il est encore avantageux que la fenêtre de sortie comprenne deux grilles semblables placées de part et d'autre de la feuille mince qu'elles supportent.

Le problème consistant à augmenter l'énergie des électrons utilisables peut être résolu par le fait qu'il est prévu, entre la grille d'extraction et la cathode haute tension, au moins une électrode supplémentaire possédant une partie active géométriquement semblable à la grille d'extraction, parallèle à celle-ci, et portée à un potentiel choisi, intermédiaire entre ceux de la grille d'extraction et de la cathode haute tension.

De préférence, la ou les électrodes supplémentaires sont percées, en dehors de leurs parties actives, pour permettre le pompage des gaz à l'intérieur de la chambre de haute tension.

Pour sa part, la chambre de haute tension comprend un orifice de pompage, prévu derrière la cathode, à l'opposé de la grille d'extraction et de la ou des électrodes intermédiaires.

Selon un autre aspect de l'invention, les moyens d'ionisation comprennent un filament anodique, et des moyens d'alimentation électriques de ce filament comportant une partie élastique, permettant la compensation de son allongement. Dans certaines formes de réalisation, les moyens d'ionisation comprennent aussi un filament secondaire d'amorçage.

Selon encore un autre aspect de l'invention, la cathode est, de préférence, supportée par un tube isolateur dont le conduit interne permet le passage de la connexion d'alimentation sous haute tension, et le passage d'un fluide de refroidissement qui revient par un conduit percé dans la paroi de ce tube isolateur.

De leur côté, la grille d'extraction et la grille support de la fenêtre de sortie sont avantageusement définies dans des pièces massives propres à la circulation d'un fluide de refroidissement.

D'autres caractéristiques et avantages de l'invention apparaîtront à l'examen de la description détaillée ci-après, et des dessins annexés, sur lesquels :

- la figure 1 est une vue en coupe verticale longitudinale d'un premier mode de réalisation particulier du canon à électrons selon l'invention;
- la figure 2 est une coupe suivant AA dans le plan transversal de la figure 1;
- les figures 3A et 3B sont des schémas illustrant l'effet de masquage selon l'invention;
- les figures 4A et 4B sont des schémas illustrant l'effet de focalisation selon l'invention;
- les figures 5A et 5B sont des schémas illustrant respectivement une focalisation insuffisante et une focalisation excessive;
- les figures 6A et 6B sont des schémas illustrant la mise en oeuvre de l'effet de focalisation, à partir d'un montage expérimental défini en référence à la figure 4B;
- la figure 7 est le schéma de principe d'un dispositif à grilles d'extraction multiples, c'est-à-dire avec électrodes d'extraction auxiliaires, selon l'invention;
- les figures 8A et 8B sont des schémas illustrant certains aspects de réalisation de la fenêtre de sortie;

- la figure 9 est un schéma illustrant une variante de réalisation de la fenêtre de sortie;
- la figure 10 est un schéma illustrant une application d'un dispositif selon l'invention au traitement par irradiation d'un matériau défilant;
- la figure 11 est un schéma illustrant une autre variante de réalisation de l'invention; et
- la figure 12 est une vue en coupe longitudinale d'un second mode de réalisation de l'invention, comportant deux étages d'accélération dans la chambre à haute tension.

Les formes et la géométrie interviennent à de nombreux titres dans la présente invention. En conséquence, les dessins annexés sont à considérer comme partie intégrante de la présente description, et pourront contribuer, le cas échéant, à la définition de l'invention.

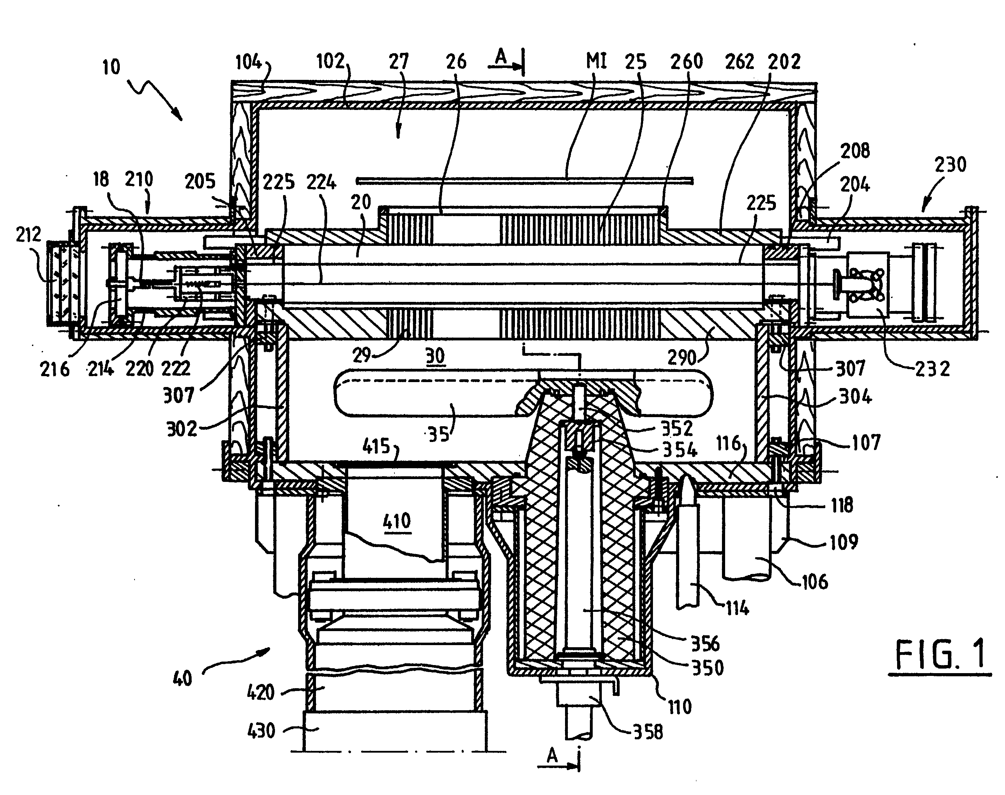

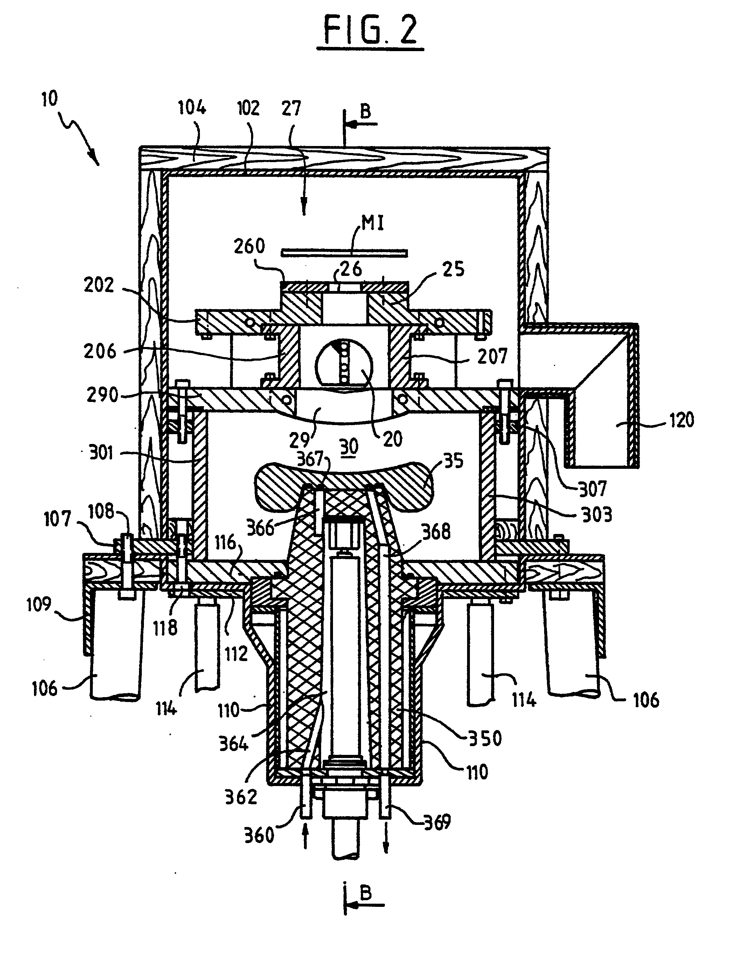

Il est maintenant fait référence aux figures 1 et 2, pour la description d'un premier mode de réalisation de l'invention, qui sera exposé en détail.

Le canon à électrons est contenu dans une enceinte 10, délimitée par une paroi en plomb 102, assurant une protection contre les rayons X engendrés par le faisceau d'électrons, doublée d'une paroi de contre-plaqué 104. L'ensemble est supporté par quatre pieds 106, solidaires deux à deux de cornières horizontales 109. Celles-ci supportent par l'intermédiaire d'une paroi de contre-plaqué un capuchon inférieur 110, en plomb, qui soutient à son tour la plaque de base 107 de l'enceinte 10. La fixation est assurée par des vis 108 entre la cornière 109 et la plaque de base 107.

Le reste de l'enceinte 10 a la forme générale d'une cloche, posée sur la plaque de fond 107.

Au-dessous, le capuchon 110 sert au logement de différents éléments qui supportent la cathode, ainsi qu'au raccordement aux moyens de pompage, comme on le verra plus loin. Des vérins 114 assurent le soutien des différentes pièces associées à la cathode, par rapport au fond intérieur 116. En plus, des vis 118 assurent le maintien de ce fond par rapport à la plaque de base 107. A l'extérieur, le capuchon 110 est également soutenu par une plaque 112, munie de fixations par vis sur la plaque 116.

Latéralement, l'enceinte 10 est munie d'un tube large 120 permettant l'arrivée des câbles électriques, des canalisations d'hélium et du fluide réfrigérant.

On notera dès maintenant que de nombreuses étanchéités sont prévues à l'intérieur des chambres d'ionisation et de haute tension. Elles ne seront pas décrites en détail, l'homme de l'art pouvant les reconnaître sur le dessin.

Il en est de même pour les trajets de fluide de refroidissement, dont seule une partie sera décrite.

A l'intérieur de l'enceinte 10 est définie une chambre d'ionisation 20. Celle-ci est délimitée par une paroi supérieure 202, dont la partie centrale est aménagée sous la forme d'une grille support 25. Des canalisations 204 sont prévues pour permettre la circulation d'un fluide de refroidissement de la grille. La chambre 20 comporte encore des parois latérales longues 206 et 207, ainsi que des parois latérales d'extrémités 205 et 208. La forme de cette chambre 20 en section droite horizontale est sensiblement rectangulaire.

Face aux petits côtés de cette chambre, l'enceinte 10 comporte une extension latérale 210 à gauche (figure 1) munie d'un hublot 212, et, à droite, une extension latérale 230.

En plus de sa fonction d'observation par le hublot 212, l'extension 210 loge intérieurement un manchon large 214, fermé. L'extrémité 216 de ce manchon est transparente et supporte en 18 une arrivée électrique qui est supportée par deux colonnettes isolantes 220. Ces colonnettes 220 portent un équipage à ressort 222, qui permet l'alimentation d'un fil anodique 224 traversant complètement sur sa longueur la chambre d'ionisation 20. On assure ainsi, selon une caratéristique avantageuse de l'invention, que le fil 224 reste tendu, malgré l'allongement qui va résulter de son échauffement en service. De préférence, il est également prévu dans la chambre d'ionisation 20, parallèlement au fil 224, un fil d'amorçage 225 dont l'alimentation n'est pas illustrée en détail.

A l'opposé, l'extension latérale 230 comporte en 232 un passage d'hélium.

Enfin, la partie basse de la chambre d'ionisation 20 est fermée par une pièce 290, dont la partie centrale définit une grille d'extraction 29.

Fonctionellement, les parties les plus importantes du canon à électrons, pour ce qui est de la présente invention, vont être la grille d'extraction 29, la grille support de la fenêtre à électrons 25, la pellicule métallique mince 26 formant fenêtre à électrons bridée par l'intermédiaire de la pièce 260.

Au-dessus de la pellicule métallique 26 défile le matériau à irradier MI.

Au-dessous de la chambre d'ionisation 20 est définie une chambre de haute tension 30. La paroi haute de cette chambre 30 est déterminée par la pièce 290. Latéralement, la chambre de haute tension 30 est délimitée par des parois 301 et 303 dans un sens, 302 et 304 dans l'autre. Ces parois sont brasées d'une part sur la plaque inférieure 107, d'autre part sur une plaque supérieure 307.

Comme précédemment indiqué, la chambre de haute tension 30 est fermée en bas par la plaque 116. Celle-ci comporte un orifice 415 allant vers des organes de pompage désignés dans leur ensemble par 40. Avantageusement, on prévoit d'abord en 410 une zone de transition permettant notamment des mesures des pressions régnant à l'intérieur de la chambre de haute tension 30. ensuite, le dispositif 40 comporte une liaison 420 vers la pompe 430 qui est de préférence une pompe à vide turbo-moléculaire.

La plaque de base 116 est encore percée pour permettre le passage d'un tube 350, formant isolateur en même temps que support pour la cathode 35 logée dans la chambre de haute tension 30. Alésé axialement, le tube 350 loge un conducteur isolé 356, muni d'une connexion externe 358, et aboutissant à un organe également conducteur 354 qui alimente un pion 352 traversant la coiffe supérieure de l'isolateur 350, pour venir alimenter la cathode 35.

De forme oblongue, cette cathode 35 possède une partie supérieure concave, en section droite transversale, comme le montre la figure 2.

L'isolateur 350 est encore muni d'une connexion d'arrivée de fluide de refroidissement 360, qu'une tubulure percée dans l'isolateur lui-même permet de faire communiquer avec l'interieur de celui-ci. En partie haute, le fluide de refroidissement est repris par une tubulure 366 qui communique avec un passage annulaire de réfrigérant 367. A l'autre extrémité, celui-ci aboutit à une tubulure 368, intégrée dans la paroi même de l'isolateur 350, et aboutissant en 369 à la conduite de retour du réfrigérant.

On aura noté que la figure 1 est une vue suivant la ligne de coupe B-B de la figure 2; inversement, la figure 2 est une vue suivant la ligne de coupe A-A de la figure 1, ligne de coupe qui est brisée pour passer d'une part dans le plan de symétrie des grilles 25 et 29, d'autre part dans l'axe de l'isolateur 350.

Le fonctionnement du canon à électrons peut être résumé comme suit : la chambre d'ionisation 20 et la chambre haute tension 30 contiennent toutes deux un gaz à très faible pression, susceptible de s'ioniser positivement : ici 10 à 50 mTorr d'hélium. Ces deux chambres communiquent par l'intermédiaire de la grille d'extration 29. Les parois de la chambre d'ionisation 20 et de la chambre haute tension 30 sont au potentiel de la masse. Il en est de même pour la grille d'extraction 29 elle-même, remarque étant faite que celle-ci peut être à un potentiel légèrement différent.

La chambre d'ionisation contient des électrodes nécessaires à l'établissement d'une décharge électrique.Il suffit en général de faibles différences de potentiel entre les électrodes de la décharge pour réaliser l'ionisation. Il est usuel de prévoir des tensions de 500 à 1000 volts en régime continu, ou bien de 10 à 20 kilovolts en régime pulsé.

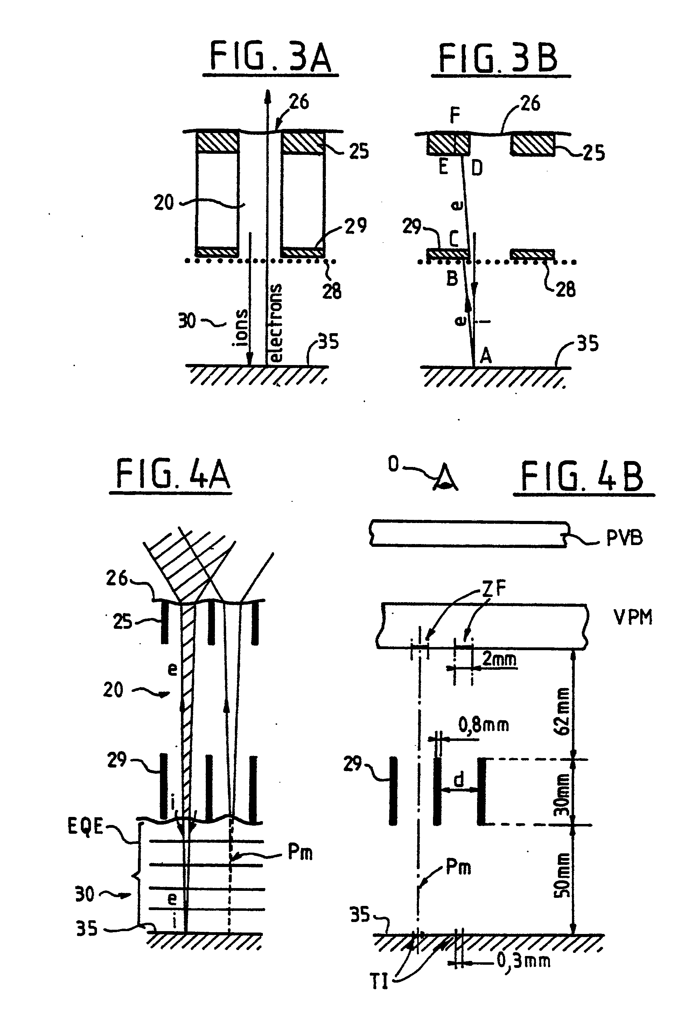

Une partie des ions créés par la décharge est accélérée vers la cathode de haute tension 35, en passant au travers de la grille d'extraction 29. Les ions tombent sur la cathode haute tension 35 (figure 3A). La cathode haute tension est portée en permanence à un potentiel négatif élevé noté $V_{HT}$, qui est par exemple de -200 kilovolts.

Si l'on néglige l'énergie initiale des ions au niveau de la grille d'extraction 29, ceux-ci arrivent sur la cathode 35 avec une énergie égale à $e.V_{HT}$ (en admettant qu'il s'agit d'ions mono-charge). Les électrons résultant de l'émission secondaire à la surface de la cathode 35 sont à leur tour accélérés vers la grille d'extraction 29, qu'ils atteignent avec une énergie $e.V_{HT}$. Ils traversent ensuite la chambre d'ionisation 20, pour atteindre la fenêtre de sortie 26.

Il est préférable, mais non indispensable, que les surfaces de la cathode 35 et de la grille d'extraction 29 qui sont en regard l'une de l'autre aient une forme telle que les que les lignes de champ électrique dans l'espace qui les sépare soient approximativement rectilignes, et normales à ces deux surfaces.

En conséquence, ces deux surfaces peuvent être par exemple planes et parallèles, ou bien cylindriques et coaxiales, ou encore sphériques et concentriques. Dans les deux derniers cas, l'angle d'ouverture du faisceau peut être grand, et même atteindre 360° dans le cas d'un canon à électrons cylindrique coaxial.

On note sur les figures 3A et 3B que la grille d'extraction 29 se voit associer une grille à mailles fines 28, laquelle assure la condition précitée pour les lignes de champ électrique, à savoir leur caractère rectiligne et perpendiculaire aux surfaces que définissent la grille fine 28 aussi bien que la face plane 35 de la cathode et réduit la pénétration du potentiel électrique dans la chambre d'ionisation.

Dans ces conditions, un ion et les électrons qu'il émet ont des trajectoires approximativement superposées correspondant à une même ligne de champ.

Toutefois, le Demandeur a observé, en pratique, qu'il existe une composante transversale du champ électrique, principalement au niveau de la grille d'extraction 29. Il en résulte une déviation légère des trajectoires. Les faibles composantes transversales des vitesses initiales tant des ions que des électrons ajoutent une déviation supplémentaire.

Ainsi (figure 3B), une partie des électrons arrivant au niveau de la grille d'extraction traversent celle-ci, puis, en ligne droite, la chambre d'ionisation (qui est un espace quasi-équipotentiel), puis enfin la fenêtre à électrons qui sépare le canon à électrons de la zone d'utilisation dont la pression est généralement élevée (de l'or dre de l'atmosphère) quelle que soit l'application envisagée.

La grille d'extraction est indispensable, car elle constitue un écran électrostatique entre la chambre d'ionisation et la chambre haute tension, dans laquelle existe un champ électrique très intense, de l'ordre de quelques dizaines de kilovolts par centimètre. Cet écran permet de produire une ionisation uniforme, et d'intensité voulue, dans la chambre d'ionisation, quel que soit le potentiel appliqué sur la cathode haute tension du canon à électrons.

La fenêtre à électrons se compose d'une feuille 26, assez mince pour être transparente aux électrons d'énergie élevée (e.$V_{HT}$ où $V_{HT}$ est le potentiel à la cathode). Cette feuille peut être réalisée en un métal tel que l'aluminium ou le titane, et posséder une épaisseur de quelques dizaines de micromètres.

Il a été observé que beaucoup d'applications, notamment celles relatives au traitement des metériaux par irradiation, requièrent une largeur de fenêtre supérieure au centimètre. On a lors constaté qu'il est indispensable de prévoir sous la feuille mince 26 une grille support 25, pour que celle-ci résiste à la pression.

Les expérimentations menées par le Demandeur ont montré que le rendement d'un canon à électrons à émission secondaire dépend notamment des transparences de la grille d'extraction 29 (pour les ions d'une part, les électrons d'autre part), et de l'ensemble de la fenêtre à électrons et de son support pour les électrons.

Dans les modes de réalisation connus, la grille d'extraction est généralement une grille métallique tissée dont la transparence ne peut dépasser 70% environ.

Pour sa part, la grille support de la fenêtre à électrons peut être constituée de gros fils tendus, qui permettent une transparence allant jusqu'à 90%. Toutefois, en pratique, dès que le canon fonctionne à pleine puissance et avec une grande largeur de fenêtre (quelques centimètres ou plus), la transparence ne dépasse pas 70%, en raison de la nécessité d'évacuer par conduction thermique (ou par circulation de fluide) l'énergie dépensée par le faisceau d'électrons lors de la traversée de la feuille mince, et aussi par impact direct sur la grille support de celle-ci.

Il en résulte que le produit de deux transparences est de l'ordre de 0,5.

La présente invention va apporter une disposition particulière de l'ensemble grille d'extraction et grille support de fenêtre à électrons, qui permet principalement une augmentation du rendement du canon, et secondairement une augmentation de la tension d'accélération de celui-ci, au moyen de montages bi-étagés, ou multi-étagés, ceci sans perte de rendement.

Les figures 3A et 3B vont permettre maintenant la description de l'effet de masque.

Dans les configurations connues du canon à électrons à émission secondaire, le courant d'électrons est émis quasi-uniformément par la cathode à haute tension. Au retour, une partie du courant d'électrons est alors interceptée par la grille d'extraction, à proportion de la transparence de celle-ci.

En interposant un masque 29 au niveau de la grille d'extraction (figure 3A), ce masque bloque l'extraction des ions dans ses parties occultantes. Les ions qui sont au contraire extraits à la surface des trous du masque, vers la chambre de haute tension 30, produisent l'émission d'électrons secondaires au niveau de la cathode 35. Ces électrons repas sent alors par les mêmes trous du masque 29, leurs trajectoires étant approximativement superposées à celles des ions qui leur ont donné naissance.

En plaçant maintenant la grille support 25 de la fenêtre à électrons 26 exactement en regard des trous du masque, il apparaît que les électrons qui traversent la grille d'extraction 29 au niveau des trous du masque passent également par les trous de la grille support 25. Tout se passe alors comme si celle-ci était parfaitement transparente.

En pratique, on peut placer le masque soit au-dessus, soit au-dessous de la grille d'extraction.

Toutefois, il a été observé qu'il subsiste une composante transversale de la vitesse initiale des électrons secondaires à laquelle s'ajoute l'effet de la composante transversale du champ électrique à proximité de la grille d'extraction. On observe également des micro-aspérités à la surface de la cathode 35, micro-aspérités qui subsistent malgré le polissage rendu nécesaire pour des raisons de tenue en tension. En conséquence, les ions émis en bordure du masque 29, et arrivant en A (figure 3B) émettent des électrons tombant en B sur les parties occultantes du masque. La transparence effective de la grille d'extraction 28 munie d'un masque 29 est de ce fait légèrement inférieure à sa valeur théorique.

De plus, à l'intérieur de la chambre d'ionisation, les trajectoires des électrons sont pratiquement rectilignes. mais la petite composante transverse de la vitesse des électrons, peut conduire certains électrons qui ont traversé le masque 29 à tomber sur des parties occultantes de la grille support 25. On observe en CD un exemple d'une telle trajectoire extrême, sur la figure 3B.

Dans ce dernier cas, il suffit d'ouvrir des trous un peu plus grands dans la grille support 25, par exemple jusqu'en EF sur la figure 3B, pour que la transparence effective de celle-ci à l'égard des électrons demeure égale à environ 100%.

L'ouverture de la grille support 25 de la fenêtre à électrons est évidemment limitée par l'épaisseur minimum de matière assurant sa robustesse et son refroidissement. Le même résultat est obtenu avec une ouverture moindre de la grille support à condition de réduire autant qu'il est possible la distance séparant les grilles 25 et 29 délimitant l'épaisseur de la chambre d'ionisation. L'épaisseur habituelle de la chambre d'ionisation est de l'ordre de 4 à 10 cm. Cette épaisseur a pu être réduite à 1 et 2 cm dans une chambre d'ionisation de grande étendue (longeur 50 cm, largeur 9 cm) et fournissant une ionisation uniforme, continue et intense (courant de charge 20 à 60 mA) et à une pression assez basse (10 à 40 m Torr d'hélium) pour être compatible avec l'utilisation de cette chambre dans un canon à émission secondaire suivant l'invention.

L'effet de masque qui vient d'être décrit est en lui-même suffisant pour conférer un haut rendement au canon à électrons selon l'invention.

Mais il est avantageux, au moins pour certaines applications, d'utiliser aussi l'effet de focalisation que l'on décrira maintenant.

Cet effet de focalisation met à profit la composante transverse du champ électrique, dont on a vu plus haut qu'elle est gênante dans le cas de l'effet de masque.

La figure 4A fait apparaître une grille d'extraction 29 constituée de lames régulièrement espacées, parallèles entre elles et perpendiculaires à la surface de la cathode 35. Elle correspond au mode de réalisation des figures 1 et 2.

on a représenté en EQE la forme approximative des équipotentielles dans la chambre de haute tension 30. Le Demandeur a remarqué que, dans cette configuration, les équipotentielles prennent une forme concave, près de la grille d'extraction 29, et entre chaque lame de celle-ci.

Cette configuration correspond fonctionnellement à une lentille électrostatique (cylindrique dans l'exemple illustré) qui provoque la convergence des trajectoires des ions (i) comme représenté très schématiquement sur la figure 4A.

Les ions convergent ainsi vers une zone étroite de la surface de la cathode haute tension 35, zone qui est située symétriquement par rapport à l'intersection du plan médian Pm de deux lames successives et de la surface de la cathode haute tension 35.

Tous les électrons (faisceau e) étant émis dans ces zones de convergence, le faisceau d'électrons se compose de rideaux, dont on voit seulement la section droite en coupe sur la figure 4A. Ces faisceaux sont légèrement défocalisés au passage de la grille d'extraction 29.

Comme dans le cas de l'effet de masque, on place les lames constituant la grille support 25 en regard de celles de la grille d'extraction 29. Le faisceau d'électrons traverse alors la feuille mince 26 dans des zones de largeur nettement inférieure à l'intervalle entre deux lames de la grille support 25, comme le montre la figure 4A.

Il faut aussi noter que l'effet de focalisation des ions, dont l'énergie est très faible lorsqu'ils abordent la grille d'extraction 29, est nettement plus important que l'effet de défocalisation que subiront les électrons, puisque leur énergie est au contraire très élevée (e.V$_{HT}$) à cet endroit.

Alors que l'effet de masque permettait seulement d'amener au voisinage de 100% la transparence de la grille support 25 pour les électrons, il apparaît que l'effet supplémentaire de focalisation permet aussi d'amener à 100% la transparence de la grille d'extraction 29. Il en résulte naturellement une amélioration supplémentaire du rendement du canon à électrons.

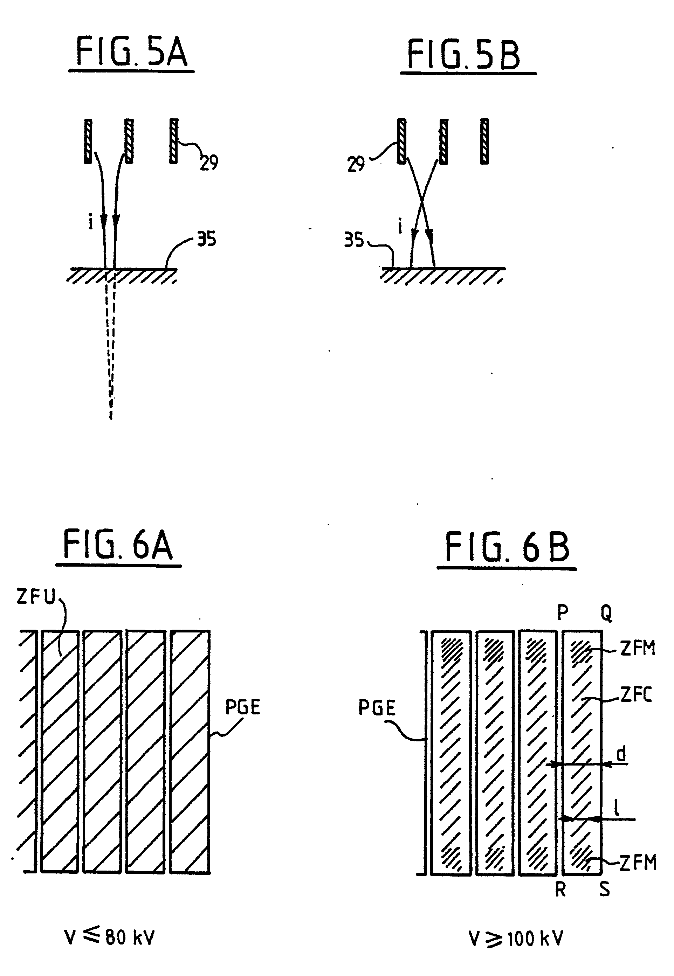

Il faut bien sûr éviter que la focalisation soit insuffisante (figure 5A), le foyer des trajectoires ioniques étant largement au-delà de la cathode 35, ou au contraire excessive (figure 5B) si ce même foyer est en amont de la cathode 35.

L'effet de focalisation a pu être mis en évidence expérimentalement, avec le montage illustré sur la figure 4B.

La fenêtre à électrons (grille support 25 et feuille mince 26) est remplacée par une plaque VPM de verre Pyrex (Marque déposée) munie d'une couche métallisée du côté de la chambre d'ionisation 20. Il devient possible d'observer, au travers de cette plaque, la lumière émise par la décharge électrique dans la chambre d'ionisation lorsque le canon à électrons est en fonctionnement. On observe aussi la fluorescence induite par l'impact du faisceau d'électrons, à l'intérieur du verre Pyrex, dans la couche mince pénétrée par le faisceau.

L'observateur O (ou le film photographique) sont protégés du rayonnement X par une plaque de verre au plomb PVB, d'épaisseur suffisante. A cette fin, est ménagé dans la paroi supérieure de l'enceinte 10 un hublot d'observation.

Les intensités lumineuses des deux effets sont du même ordre de grandeur, mais leurs couleurs sont très différentes puisque la fluorescence du faisceau se manifeste en bleu tandis que la décharge se manifeste en jaune-rouge. L'usage d'une plaque de verre Pyrex métallisée VPM (500 angströms d'aluminium) permet de bloquer la lumière émise par la décharge, alors qu'elle est facilement traversée par le faisceau d'électrons dès que l'énergie de celui-ci est suffisante.

On notera encore que la figure 4B n'est pas à l'échelle, mais qu'elle comporte des cotes exprimées en millimètres.

Pour un intervalle entre lames d prenant les valeurs 4, 6, 8 et 12 mm, et le canon à électrons étant en fonctionnement, on observe la fluorescence induite par le faisceau d'électrons dans la plaque de Pyrex VPM.

Celle-ci est visible à partir d'une tension appliquée sur la cathode 35 de l'ordre de -10 kilovolts (figure 6A).

La fluorescence croît rapidement avec la tension de cathode V$_{HT}$, et elle est relativement uniforme, comme illustré en ZFU, tandis que les contours PGE désignent la projection des ouvertures rectangulaires de la grille d'extraction sur la plaque de Pyrex VPM.

Lorsque $V_{HT}$ passe à des valeurs comprises entre 80 et 100 kilovolts, on observe une concentration de la fluorescence. A partir de 100 kilovolts, la fluorescence est concentrée dans une bande de 2 à 3 mm de large, pour d= 4 et 6 mm, et de 3 à 4 mm de large, pour d = 8 et 12 mm, comme visible sur la figure 6B, où I désigne la largeur de cette bande.

Aucun changement n'est observé entre 100 et 150 kilovolts, mais l'intensité de la fluorescence continue de de renforcer.

En dehors de cette zone de concentration de largeur I, une fluorescence uniforme d'intensité beaucoup plus faible subsiste, ce qui implique que si la plaque de Pyrex était remplacée par la grille support de fenêtre à électrons suivant la figure 4A, la transparence de cette grille serait en fait légèrement inférieure à 100%.

Par ailleurs, les zones fluorescentes sont un peu plus courtes que les ouvertures rectangulaires de la grille d'extraction (en section droite). On observe encore, aux deux extrémités de chaque zone fluorescente intenses ZFC, un renforcement local ZFM de l'intensité lumineuse. Ce renforcement peut être expliqué par le fait que la focalisation du faisceau, aux extrémités, se fait non seulement le long des côtés PR et QS, comme dans la zone centrale, mais aussi le long des côtés PQ et RS (figure 6B).

Le même phénomène est observé, que le canon à électrons fonctionne en régime continu ou en régime pulsé. Il est sensiblement indépendant de la densité de courant instantané du faisceau d'électrons, dans la limite des valeurs comprises entre 30 microampères par centimètre carré et 60 milli-ampères par centimètre carré. Par contre, l'intensité de la fluorescence augmente avec la densité de courant moyenne du faisceau.

Au démontage du canon à électrons, on a pu observer sur la cathode 35 (figure 4B) les traces d'impact des ions, qui se traduisent par une coloration brune sur une surface d'acier inoxydable initialement polie. La largeur de ces traces est de l'ordre de 0,3 à 0,5 mm. Leur longeur est identique à celle des zones de fluorescence ZFC sur la plaque de Pyrex. Ces traces sont situées à l'intersection des plans médians Pm entre deux lames consécutives avec la surface utile de la cathode 35.

Ces observations, qui correspondent aux modes de réalisation des figures 1 et 2, corroborent les indications données plus haut à propos des effets de masquage et de focalisation.

Si l'on recherche l'effet de masque seul, les ouvertures de la grille d'extraction 29 peuvent être en principe de forme quelconque, choisie en fonction de l'application.

L'effet de focalisation qui suppose un minimum d'effet de masque, a été observé dans le cas d'une grille constituée de lames minces parallèles.

Il est estimé que cet effet peut aussi être obtenu avec une grille d'extraction constituée de lames épaisses parallèles ou d'une plaque assez épaisse percée de trous cylindriques ou coniques. Dans ce dernier cas, les ions seront focalisés sur une zone circulaire dont le centre est l'intersection de l'axe du trou avec la surface de la cathode haute tension 35. La grille support 25 de la fenêtre à électrons doit naturellement être percée de trous ayant le même axe que ceux de la grille d'extraction.

A partir des observations ci-dessus, le Demandeur a constaté que l'effet de focalisation peut être difficile à optimiser, dans certains cas, car on ne peut intervenir à cet effet que sur la forme des trous et sur l'épaisseur de la grille d'extraction 29 par rapport à la dimension des trous.

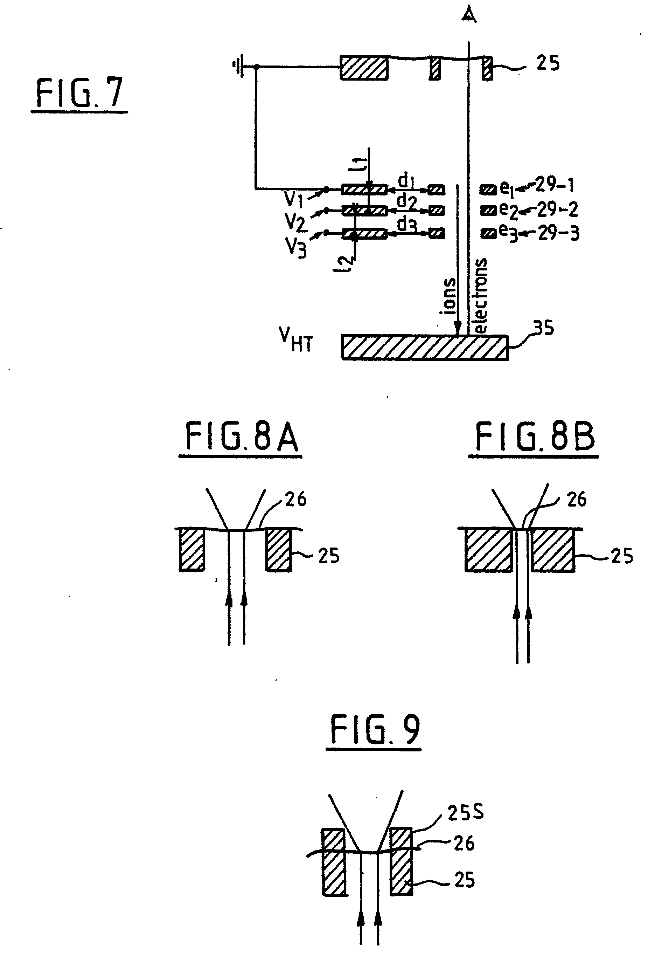

Pour obtenir une telle optimisation, il peut être avantageux de remplacer la grille d'extraction unique par un système de deux ou trois grilles d'extraction telles que 29-1, 29-2 et 29-3 (figure 7). Les épaisseurs de ces grilles sont respectivement e1, e2, e3, leurs dimensions de trous d1, d2, d3, leurs intervalles 11, 12, et leurs tensions de polarisation respectives V1, V2, V3. On dispose alors de tous ces paramètres pour optimiser l'effet de focalisation, en fonction notamment de la forme désirée du masque.

Les conséquences pratiques des effets de masque de focalisation selon l'invention seront maintenant résumées.

L'augmentation du rendement du canon s'accompagne d'une diminution des contraintes thermo-mécaniques ressenties par les grilles. La chaleur à évacuer par la grille support 25 se réduit maintenant à l'énergie déposée dans la feuille mince 26. La chaleur à évacuer par la grille d'extraction 29 est nulle dans le cas où l'on utilise l'effet de focalisation; dans le cas où l'on se contente de l'effet de masque, elle est inchangée pour un courant de faisceau donné, mais elle devient plus facile à évacuer, puisqu'elle est répartie sur une plus grande surface de métal thermiquement conducteur.

De plus, comme il est possible, sans changer la transparence globale et par conséquent le rendement, d'augmenter l'épaisseur des lames ou barreaux constituant les grilles, les coûts d'usinage de celles-ci peuvent être réduits, puisqu'on peut par exemple remplacer l'électro-érosion par un fraisage classique. On peut aussi faciliter l'évacuation de chaleur par conduction thermique ou par le passage d'un fluide de refroidissement.

Une fabrication encore plus commode est obtenue si l'on utilise des grilles constituées d'une plaque percée de trous ronds, cylindriques ou coniques par exemple, remarque étant faite que dans ce cas, l'évacuation de chaleur est un peu moins bonne.

La comparaison des figures 8A et 8B montre ailleurs que l'on peut augmenter l'épaisseur (horizontale) des barreaux de la grille support 25, sans changer le pas de celle-ci. Il en résulte une diminution de la portée de la feuille mince 26, ce qui augmente sa robustesse et/ou autorise une diminution de son épaisseur. Il en résulte une augmentation de sa transparence propre, et l'énergie disponible pour le faisceau d'électrons en sortie se rapproche de sa valeur maximum $e.V_{HT}$.

Comme le montre la figure 9, l'évacuation de chaleur peut également être renforcée sans perte sur le faisceau d'électrons, en plaçant des barreaux supplémentaires tels que 25 S, de l'autre côté de la feuille mince 26.

Au niveau de l'utilisation, le faisceau d'électrons se présente sous forme de rideaux de faible épaisseur, et nettement séparés les uns des autres. Ce phénomène est sensiblement atténué d'une part en raison de la dispersion du faisceau d'électrons dans la feuille mince 26, d'autre part en raison de la dispersion qui se produit aussi dans le gaz situé entre cette feuille mince 26 et le produit à traiter. Cette dispersion provoque un recouvrement des faisceaux, comme on le voit sur la figure 4A.

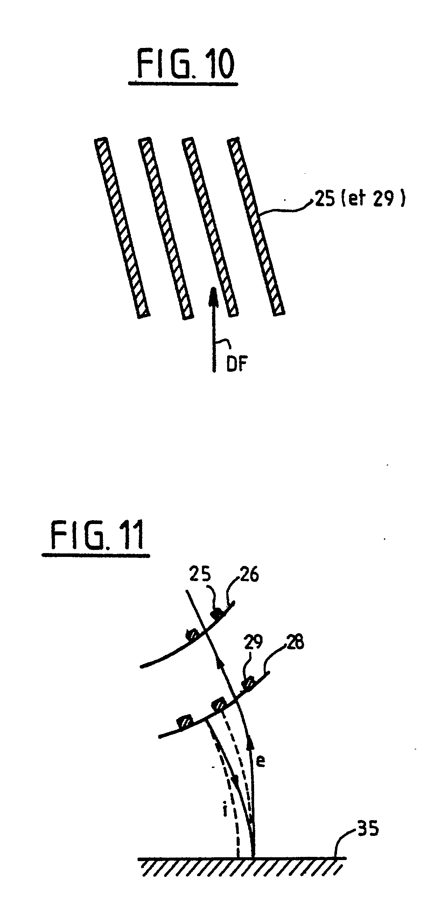

L'uniformité de la dose d'irradiation peut être encore insuffisante pour certaines applications. Il est alors possible, comme illustré sur la figure 10, d'orienter les lames constitutives des grilles 25 et 29 d'une manière oblique par rapport à la direction de défilement DF du produit à traiter, de sorte que tout élément de surface de ce produit passe devant au moins un rideau d'électrons. Il suffit à cet effet que l'écart entre les deux extrémités d'une même lame, mesuré perpendiculairement à la direction DF, soit au moins égal au pas entre deux lames.

Dans les modes de réalisation décrits jusqu'à présent, on a supposé que les lignes de champ électrique sont sensiblement normales à la surface de la cathode 35. Cette condition n'est pas obligatoire.

Tout d'abord, un faible écart à la condition de normalité (écart de quelques degrés par exemple) est acceptable si les faisceaux d'électrons sont assez bien collimatés, pour que tous les électrons passent quand même par les mêmes trous que les ions qui les ont émis.

De plus, il n'est pas nécessaire que les électrons repassent par les mêmes trous de la grille d'extraction que les ions qui ont provoqué leur émission, dès lors qu'ils peuvent passer par d'autres trous sans être interceptés par la grille d'extraction. Ceci est illustré sur la figure 11, où l'on voit que le faisceau d'ions i passe par un trou de la grille d'extraction 29, tandis que les électrons secondaires qui en résultent passent par le trou adjacent de cette même grille. On note aussi que les lignes de champ électrique sont obliques par rapport à la surface active de la cathode 35. Il est alors facile d'aligner les trous de la grille d'extraction 29 et de la grille support 25 de la fenêtre à électrons 26, car l'espace entre ces deux grilles est quasi-équipotentiel, et les trajectoires des électrons sont alors pratiquement rectilignes, comme illustré.

La description faite jusqu'à présent a porté, en détail sur un mode de réalisation de l'invention décrit en détail en référence aux figures 1 et 2; ce mode de réalisation correspond aussi aux figures 4A, 4B, 6A et 6B.

Il est considéré comme accessible à l'homme de l'art de modifier la structure illustrée en détail aux figures 1 et 2, pour correspondre à l'effet de masque seul, comme illustré schématiquement aux figures 3A et 3B.

De même, le mode de réalisation illustré en détail peut aussi être adapté conformément aux enseignements des figures 7, 8A, 8B, 9, 10 et 11.

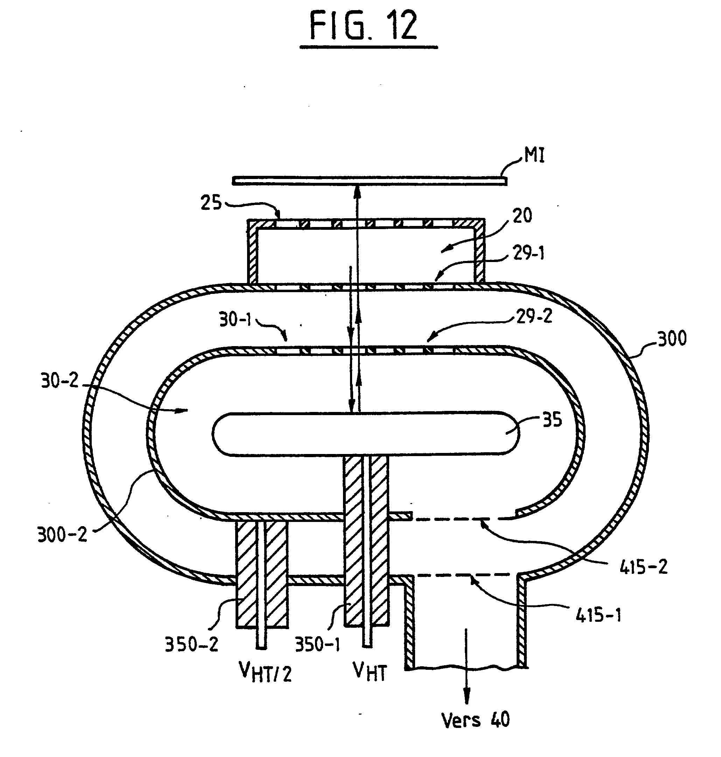

On décrira maintenant un mode de réalisation de l'invention dans lequel la chambre de haute tension est à plusieurs étages. Pour la même raison que précédemment, et dans le but d'alléger la description, ce mode de réalisation sera décrit sous forme schématique en référence à la figure 12. Il est estimé que les enseignements détaillés donnés aux premières figures permettent à l'homme de l'art la réalisation de cette variante de l'invention.

Sur la figure 12, la référence 20 désigne la chambre d'ionisation, tandis que les références 30-1 et 30-2 désignent deux parties de la chambre de haute tension. La partie supérieure 25 de la chambre d'ionisation 20 est la fenêtre de sortie des électrons, en regard de laquelle peut se trouver un matériau à irradier, noté MI.

Au-dessous de la chambre d'ionisation 20, il apparaît une première grille d'extraction 29-1. Cette grille fait partie, en commun, de la paroi de la chambre d'ionisation 20, et de celle, 300, de la chambre de haute tension.

Alors que la chambre d'ionisation 20 est ici de forme parallélépipédique, la chambre de haute tension 300 possède une forme générale cylindrique dont la base est définie par deux parois planes horizontales raccordées par des demi-circles, comme illustré.

Au centre de la chambre de haute tension 300 se trouve la cathode 35, munie d'une traversée isolante d'alimentation 350-1, et recevant une tension négative $V_{HT}$.

Entre la paroi externe 300 et la cathode 35, qui possèdent des formes homologues, est prévue une paroi intermédiaire 300-2, également homologue desdites formes, et munie en regard de la grille d'extraction 29-1 d'une seconde grille d'extraction, ou électrode intermédiaire, référencée 29-2. Cette électrode intermédiaire est soumise à une alimentation électrique par exemple à la tension $V_{HT}/2$, disponible à travers une traversée isolante 350-2, ceci dans l'hypothèse où la paroi 300-2 est sensiblement à égale distance entre la cathode 35 et la paroi externe 300.

A l'opposé des grilles 29-1 et 29-2, la paroi 300-2 possède une grille 415-2, permettant le passage d'hélium et de faire le vide dans la chambre 30-2; située de préférence en regard de la grille 415-1 de la paroi 300, qui permet à la chambre de haute tension de communiquer avec le dispositif de pompage 40.

Les grilles 29-1, 29-2 et 25 possèdent des formes homologues, de l'une des manières précédemment décrites.

La tension d'alimentation $V_{HT}/2$ peut être obtenue au moyen d'une alimentation séparée de faible puissance, ou à partir de la tension d'alimentation $V_{HT}$, en utilisant un pont diviseur résistif ou capacitif. En effet, le courant à fournir à l'électrode intermédiaire est faible, puisqu'il correspond au courant résultant des micro-claquages qui interviennent entre l'électrode intermédiaire et l'enceinte d'une part, entre l'électrode intermédiaire et la cathode d'autre part, ainsi qu'à l'interception éventuelle d'ions ou d'électrons transitant dans l'espace d'accélération au travers des trous de l'électrode intermédiaire.

La disposition bi-étagée de la figure 12 permet d'augmenter la tension limite d'alimentation. En effet, en environnement industriel, il est difficile de dépasser une tension limite entre électrodes de l'ordre de 200 à 250 kilovolts. La décomposition de l'espace d'accélération (l'intérieur de la chambre de haute tension 30) en deux ou plusieurs étages au moyen d'une ou de plusieurs électrodes intermédiaires permet de résoudre ce problème, en même temps que d'obtenir une répartition régulière de la différence de potentiel totale, et par conséquent une meilleure géométrie des lignes de champ électrique. Il est préférable que les trous de passage ménagés dans les grilles 29-1 et 29-2 soient de petites dimensions, relativement à l'espacement entre ces grilles.

En permettant l'augmentation de la tension d'alimentation générale, les modes de réalisation bi- ou multi-étagés de l'invention rendent possible l'obtention d'électrons de plus haute énergie.

**Revendications**

1. Canon à électrons, libérés par émission secondaire sous bombardement ionique, du type comprenant, dans une enceinte (10):
   - une chambre d'ionisation (20) contenant un gaz à ioniser sous faible pression et des moyens (224, 225) propres à la création d'ions positifs de ce gaz, dont les parois définissent une fenêtre de sortie (26) transparente aux électrons et, à l'opposé, une grille conductrice (29), dite d'extraction portée à un potentiel voisin de celui de la fenêtre de sortie (26),
   - une chambre à haute tension (30) qui communique avec la chambre d'ionisation (20) par la grille d'extraction (29) et, logée en regard de celle-ci, une cathode froide (35) portée à une haute tension négative par rapport à la grille d'extraction (29) et à la fenêtre de sortie (26), de sorte que cette cathode (35), soumise au bombardement d'ions provenant de la chambre d'ionisation (20) à travers la grille d'extraction (29), émet des électrons secondaires qui franchissent, en sens inverse des ions, la grille d'extraction (29), puis traversent la chambre d'ionisation (20) et sortent par ladite fenêtre (26), caractérisé en ce que la grille d'extraction est un masque (29) s'opposant partiellement dans un tens au passàge des ions, et, en sens inverse, à celui des électrons, et en ce que la fenêtre de sortie (26) comprend aussi une grille (25) formant un masque de configuration analoque à celle du masque (29) que constitue la grille d'extraction, compte tenu de la géométrie du champ électrique dans la chambre à haute tension, de sorte que les électrons secondaires créés par des ions qui ont traversé la grille d'extraction repassent pratiquement tous par celle-ci et par la fenêtre de sortie.

2. Canon à électrons selon la revendication 1, caractérisé en ce que les surfaces de la partie active de la cathode à haute tension (35), de la grille d'extraction (29), et de la grille (25) de la fenêtre de sortie (26) sont sensiblement parallèles, les lignes de champ électrique étant sensiblement rectilignes.

3. Canon à électrons selon la revendication 2, caractérisé en ce que les surfaces de la partie active de la cathode à haute tension (35), de la grille d'extraction (29) et de la grille (25) de la fenêtre de sortie (26) sont sensiblement planes.

4. Canon à électrons selon l'une des revendications 2 et 3, caractérisé en ce que les projections normales, sur la cathode de haute tension (35), des trous de la grille d'extraction (29) et de la grille (25) de fenêtre de sortie (26) sont sensiblement homothétiques l'une de l'autre.

5. Canon à électrons selon la revendication 4, caractérisé en ce que lesdites projections sont sensiblement superposables.

6. Canon à électrons selon la revendication 4, caractérisé en ce que les projections relatives à la grille (25) de la fenêtre de sortie (26) sont incluses dans celles relatives à la grille d'extraction (29).

7. Canon à électrons selon l'une des revendications précédentes caractérisé par des moyens, comprenant la grille d'extraction (29), pour focaliser les ions sur la cathode à haute tension (35), tandis que les trajectoires en sens inverse des électrons secondaires, à haute énergie, ne sont sensiblement pas modifiés par le champ électrique de focalisation.

8. Canon à électrons selon la revendication 7, caractérisé en ce que le taux de trous de la grille d'extraction (29) est proche de l'unité.

9. Canon à électrons selon l'une des revendications 1 à 6, caractérisé en ce que le taux de trous de la grille d'extraction (29) est de l'ordre de 0,5.

10. Canon à électrons selon la revendication 9, caractérisé en ce que la grille d'extraction (29) comprend un écran finement percé (28), tel qu'une grille tissée ou une feuille métallique mince percée de petits trous multiples, doublé d'un masque (29) constitué d'une plaque percée de trous nettement plus grands.

11. Canon à électrons selon l'une des revendications 7 et 8, caractérisé en ce que la grille d'extraction (29) comprend de lames parallèles entre elles et perpendiculaires à la cathode haute tension (35).

12. Canon à électrons selon l'une des revendications 7 et 8, caractérisé en ce que la grille d'extraction (29) comprend des trous larges percés dans une plaque épaisse.

13. Canon à électrons selon l'une des revendications précédentes, comportant en regard de la fenêtre de sortie (26) des moyens permettant le défilement d'un produit à traiter, caractérisé en ce que la grille d'extraction (29) possède des ouvertures allongées, disposées en biais par rapport à ce sens de défilement.

14. Canon à électrons selon l'une des revendications précédentes, caractérisé en ce que la grille (25) de la fenêtre de sortie (26) est percée de trous de taille réduite et sert de support à une feuille conductrice très mince (26).

15. Canon à électrons selon l'une des revendications précédentes, caractérisé en ce que la grille (25) de la fenêtre de sortie est une grille support d'une feuille mince (26), grille support dont les barreaux, creux, sont traversés par un fluide de refroidissement.

16. Canon à électrons selon l'une des revendications précédentes, caratérisé en ce que la fenêtre de sortie comprend deux grilles semblables (25, 25 S) placées de part et d'autre de la feuille mince qu'elles supportent.

17. Canon à électrons selon l'une des revendications précédentes, caractérisé en ce qu'il est prévu, entre la grille d'extraction (29-1) et la cathode haute tension (35) au moins une électrode supplémentaire (29-2) possédant une partie active géométriquement semblable à la grille d'extraction, parallèle à celle-ci, et portée à un potentiel choisi, intermédiaire entre ceux de la grille d'extraction (29-1) et de la cathode haute tension (35).

18. Canon à électrons selon la revendication 17, caractérisé en ce que la ou les électrodes supplémentaires (29-2) sont percées (415-2) en dehors de leur partie active, pour permettre le pompage des gaz à l'intérieur de la chambre de haute tension (30-1, 30-2).

19. Canon à électrons selon la revendication 18, caractérisé en ce que la chambre de haute tension (30) comprend un orifice de pompage (410) prévu derrière la cathode, à l'opposé de la grille d'extraction et de la ou des électrodes intermédiaires.

20. Canon à électrons selon la revendication 1 ou l'une des revendications 7 à 19, caractérisé en ce que les surfaces, de la grille d'extraction (28, 29) et de la grille de la fenêtre de sortie (25, 26), sont inclinées par rapport à la cathode à haute tension, les formes de ces grilles et la géométrie du champ électrique étant telles que les électrons secondaires peuvent repasser tous par la grille d'extraction et la grille de la fenêtre de sortie, au moins en partie par des trous différents de ceux qu'ont traversé les ions.

21. Canon à électrons selon l'une des revendications précédentes, caractérisé en ce que les moyens d'ionisation (224, 225) comprennent un filament anodique (224), et des moyens d'alimentation électrique (18) de ce filament comportant une partie élastique (222) permettant la compensation de son allongement.

22. Canon à électrons selon la revendication 21, caractérisé en ce que les moyens d'ionisation (224, 225) comprennent un filament secondaire d'amorçage (225).

23. Canon à électrons selon l'une des revendications précédentes, caractérisé en ce que la cathode (35) est supportée par un tube isolateur (350) dont le conduit interne (364) permet le passage de la connexion d'alimentation sous haute tension (354, 356), et le passage d'un fluide de refroidissement, qui revient par un conduit (368) percé dans la paroi de ce tube isolateur.

24. Canon à électrons selon l'une des revendications précédentes, caractérisé en ce que la grille d'extraction (29) et la grille support (26) de la fenêtre de sortie sont définies dans des pièces massives (202, 290) propres à la circulation d'un fluide de refroidissement.

## Patentansprüche

1. Elektronenkanone, die unter Ionenbeschuß durch Sekundäremission Elektronen freisetzt, bestehend aus folgenden, in einer Ummantelung (10) angeordneten Teilen:

– einer Ionisationskammer (20), die unter schwachem Druck ein zu ionisierendes Gas und zur Erzeugung von positiven Ionen aus diesem Gas geeignete Mittel (224, 225) enthält, deren Wandungen ein für die Elektronen durchlässiges Austrittsfenster (26) begrenzen und dem ein Steuergitter (29) gegenüberliegt, auch Extrahiergitter genannt, das auf einem dem Austrittsfenster (26) ähnlichen Potential liegt,

– einer Hochspannungskammer (30), die mit der Ionisationskammer (20) über das Extrahiergitter (29) in Verbindung steht und welchem gegenüberliegend eine Kaltkathode (35) angeordnet ist, die im Verhältnis zum Gitter (29) und dem Austrittsfenster (26) auf einer hohen negativen Spannung liegt, wobei die Kaltkathode (35) unter ans der Ionisationskammer (20) austretendem und das Extrahiergitter (29) passierenden Ionenbeschuß Sekundärelektronen emittiert, die in zu den Ionen entgegengesetzter Richtung durch das Extrahiergitter (29) treten, die Ionisationskammer (20) durchqueren und aus dem Austrittsfenster (26) austreten, dadurch gekennzeichnet, daß das Extrahiergitter eine Maske (29) ist, die zum Teil in der einen Richtung dem Durchtritt der Ionen und in der umgekehrten Richtung dem Durchtritt der Elektronen gegenüberliegt, und daß das Austrittsfenster (26) ferner ein Gitter (25) aus einer Maske aufweist, die analog der das Extrahiergitter bildenden Maske (29) aufgebaut ist, welche unter Berücksichtigung der Geometrie des elektrischen Feldes in der Hochspannungskammer ausgebildet ist, derart, daß die Sekundärelektronen, die von den das Extrahiergitter passierenden Ionen erzeugt werden, praktisch alle in Gegenrichtung durch das Extrahiergitter und das Austrittsfenster zurückfließen.

2. Elektronenkanone nach Anspruch 1, dadurch gekennzeichnet, daß die aktiven Teilflächen der Hochspannungskathode (35), des Extrahiergitters (29) und des Gitters (25) des Austrittsfensters (26) weitgehend parallel liegen und die elektrischen Feldlinien weitgehend geradlinig verlaufen.

3. Elektronenkanone nach Anspruch 2, dadurch gekennzeichnet, daß die aktiven Teilflächen der Hochspannungskathode (35), des Extrahiergitters (29) und des Gitters (25) des Austrittsfensters (26) weitgehend plan sind.

4. Elektronenkanone nach Anspruch 2 oder 3, dadurch gekennzeichnet, daß die Normalprojektion auf die Hochspannungskathode (35), die Löcher des Extrahiergitters (29) und die des Gitters (25) des Austrittsfensters (26) zueinander im wesentlichen homothetisch liegen.

5. Elektronenkanone nach Anspruch 4, dadurch gekennzeichnet, daß die Projektionen im wesentlichen deckungsgleich sind.

6. Elektronenkanone nach Anspruch 4, dadurch gekennzeichnet, daß die auf das Gitter (25) des Austrittsfensters (26) bezogenen Projektionen innerhalb der auf das Extrahiergitter (29) bezogenen Projektionen liegen.

7. Elektronenkanone nach einem der Ansprüche 1 bis 6, gekennzeichnet durch das Extrahiergitter (29) umfassende Mittel zur Fokussierung der Ionen auf die Hochspannungskathode (35), wobei die in Gegenrichtung verlaufenden Elektronenbahnen der Sekundärelektronen hoher Energie durch das elektrische Fokussierungsfeld im wesentlichen nicht beeinflußt werden.

8. Elektronenkanone nach Anspruch 7, dadurch gekennzeichnet, daß das Lochverhältnis des Extrahiergitters (29) nahe 1 liegt.

9. Elektronenkanone nach einem der Ansprüche 1 bis 6, dadurch gekennzeichnet, daß das Lochverhältnis des Extrahiergitters in der Größenordnung von 0,5 liegt.

10. Elektronenkanone nach Anspruch 9, dadurch gekennzeichnet, daß das Extrahiergitter (29) einen fein gelochten Schirm (28) besitzt, vorzugsweise ein Gittergewebe oder eine mit einer Vielzahl von kleinsten Löchern durchsetzte, dünne Metallfolie, welcher mit einer Maske (29) bezogen ist, die aus einer mit deutlich größeren Löchern durchsetzten Platte besteht.

11. Elektronenkanone nach Anspruch 7 oder 8, dadurch gekennzeichnet, daß das Extrahiergitter (29) zueinander parallele und zu der Hochspannungskathode (35) senkrechte Lamellen aufweist.

12. Elektronenkanone nach Anspruch 7 oder 8, dadurch gekennzeichnet, daß das Extrahiergitter (29) große, in eine dicke Platte gebohrte Löcher aufweist.

13. Elektronenkanone nach einem der Ansprüche 1 bis 12, mit gegenüber dem Austrittsfenster (26) angeordneten Mitteln zur Förderung der zu behandelnden Teilchen, dadurch gekennzeichnet, daß das Extrahiergitter (29) längliche Öffnungen aufweist, die – auf die Förderrichtung bezogen – schräg verlaufen.

14. Elektronenkanone nach einem der Ansprüche 1 bis 13, dadurch gekennzeichnet, daß das Gitter (25) des Austrittsfensters (26) von Löchern kleinerer Größe durchsetzt ist und als Träger für eine sehr dünne, leitende Folie (26) dient.

15. Elektronenkanone nach einem der Ansprüche 1 bis 14, dadurch gekennzeichnet, daß das Gitter (25) des Austrittsfensters ein Trägergitter für eine dünne Folie (26) ist und die hohlen Gitterstäbe des Trägergitters von einer Kühlflüssigkeit durchflossen sind.

16. Elektronenkanone nach einem der Ansprüche 1 bis 15, dadurch gekennzeichnet, daß das Austrittsfenster zwei ähnliche Gitter (25, 25S) aufweist, die beiderseits der durch sie getragenen dünnen Folie angeordnet sind.

17. Elektronenkanone nach einem der Ansprüche 1 bis 16, dadurch gekennzeichnet, daß zwischen dem Extrahiergitter (29-1) und der Hochspannungskathode (35) mindestens eine zusätzliche Elektrode (29-2) vorgesehen ist, die einen dem Extrahiergitter geometrisch ähnlichen Aktivteil aufweist, das zu diesem parallel ist, und die ein gewähltes Potential aufweist, das zwischen demjenigen des Extrahiergitters (29-1) und demjenigen der Hochspannungskathode (35) liegt.

18. Elektronenkanone nach Anspruch 17, dadurch gekennzeichnet, daß die zusätzliche(n) Elektrode(n) (29-2) außerhalb ihres Aktivteils durchbohrt (415-2) sind, um in das Innere der Hochspannungskammer (30-1, 30-2) Gase einpumpen zu können.

19. Elektronenkanone nach Anspruch 18, dadurch gekennzeichnet, daß die Hochspannungskammer (30) eine Pumpöffnung (410) aufweist, die hinter der Kathode gegenüber dem Extrahiergitter und der oder den Zwischenelektroden vorgesehen ist.

20. Elektronenkanone nach Anspruch 1 oder einem der Ansprüche 7 bis 19, dadurch gekennzeichnet, daß die Flächen des Extrahiergitters (28, 29) und des Gitters für das Austrittsfenster (25, 26) bezogen auf die Hochspannungskathode geneigt sind, wobei die Gitterform und die Geometrie des elektrischen Feldes derart sind, daß alle Sekundärelektronen durch das Extrahiergitter und das Gitter des Austrittsfensters austreten können, wobei diese zumindest teilweise durch Löcher treten, die von den von den Ionen durchquerten Löchern unterschiedlich sind.

21. Elektronenkanone nach einem der Ansprüche 1 bis 20, dadurch gekennzeichnet, daß die Ionisationsmittel (224, 225) einen Anodendraht (224) und Mittel (18) zur elektrischen Speisung des Drahtes aufweisen, der einen elastischen Teil (222) zur Längenkompensation umfaßt.

22. Elektronenkanone nach Anspruch 21, dadurch gekennzeichnet, daß die Ionisationsmittel (224, 225) einen Sekundärdraht (225) zur Zündung aufweisen.

23. Elektronenkanone nach einem der Ansprüche 1 bis 22, dadurch gekennzeichnet, daß die Kathode (35) durch ein Isolierrohr (350) gehalten ist, dessen Innenkanal (364) zur Durchführung der Hochspannungszuleitung (354, 356) und dem Zufluß einer Kühlflüssigkeit dient, die durch eine die Wandung des Isolierrohres durchstoßende Leitung (368) zurückfließt.

24. Elektronenkanone nach einem der Ansprüche 1 bis 23, dadurch gekennzeichnet, daß das Extrahiergitter (29) und das Trägergitter (26) des Austrittsfensters in Massivstücken (202, 290) liegen, welche zur Führung einer zirkulierenden Kühlflüssigkeit geeignet sind.

**Claims**

1. Electron gun, the electrons being released by secondary emission under ion bombardment, of the type comprising, in an enclosure (10):
- an ionization chamber (20) containing a gas, which is to be ionized at low pressure, and means (224, 225) suitable for generating positive ions of this gas, the chamber walls defining an exit window (26) which is transparent to electrons and, on the opposite side, a conductive grid (29) which is termed an extraction grid and is maintained at a potential approximating to that of the exit window (26),
- a high-voltage chamber (30) which communicates with the ionization chamber (20) via the extraction grid (29) and, mounted facing said grid, a cold cathode (35) which is maintained at a high negative potential with respect to the extraction grid (29) and the exit window (26), such that this cathode (35), subjected to bombardment by ions coming through the extraction grid (29) from the ionization chamber (20), emits secondary electrons which pass through the extraction grid (29) in the opposite direction to the ions, and which then cross the ionization chamber (20) and exit via said window (26), characterized in that the extraction grid is a mask (29) which partially opposes the flight of the ions in one direction and the flight of the electrons in the opposite direction, and in that the exit window (26) also comprises a grid (25) which forms a mask having a configuration analogous to that of the mask (29) which forms the extraction grid, account being taken of the geometry of the electric field in the high-voltage chamber, in a manner such that virtually all the secondary electrons generated by ions which have passed through the extraction grid return through said grid and pass through the exit window.

2. Electron gun according to claim 1, characterized in that the surfaces of the active portion of the high-voltage cathode (35), of the extraction grid (29) and of the grid (25) associated with the exit window (26) are substantially parallel, the lines of the electric field being substantially straight.

3. Electron gun according to Claim 2, characterized in that the surfaces of the active portion of the high-voltage cathode (35), of the extraction grid (29) and of the grid (25) associated with the exit window (26) are substantially plane.

4. Electron gun according to Claim 2 or Claim 3, characterized in that the normal projections, onto the high-voltage cathode (35), of the holes of both the extraction grid (29) and the grid (25) associated with the exit window (26) substantially match one another in both shape and location.

5. Electron gun according to Claim 4, characterized in that said projections are essentially superposable.

6. Electron gun according to Claim 4, characterized in that the projections relative to the grid (25) associated with the exit window (26) fall within those relative to the extraction grid (29).

7. Electron gun according to any one of the preceding Claims, characterized by means, including the extraction grid (29), for focussing the ions onto the high-voltage cathode (35), whereas the flight paths of the secondary, high-energy electrons, in the opposite direction, are not appreciably modified by the electric focussing field.

8. Electron gun according to Claim 7, characterized in that the proportion of the extraction grid (29) corresponding to holes is almost 100%.

9. Electron gun according to any one of Claims 1 to 6, characterized in that the proportion of the extraction grid (29) corresponding to holes is of the order of 50%.

10. Electron gun according to Claim 9, characterized in that the extraction grid (29) comprises a finely perforated screen (28), such as a woven grid or a thin metal foil through which a multitude of small holes have been pierced, said screen being backed by a mask (29) that is composed of a plate through which substantially larger holes have been pierced.

11. Electron gun according to Claim 7 or Claim 8, characterized in that the extraction grid (29) is composed of lamellae which are parallel to one another and perpendicular to the high-voltage cathode (35).

12. Electron gun according to Claim 7 or Claim 8, characterized in that the extraction grid (29) comprises wide holes which have been made in a thick plate.

13. Electron gun according to any one of the preceding Claims, comprising means of enabling a product to be moved past, facing the exit window (26), said product being one that is to be treated, characterized in that the extraction grid (29) has elongated apertures which are arranged obliquely with respect to the product movement direction.

14. Electron gun according to any one of the preceding Claims, characterized in that the grid (25) associated with the exit window (26) has small pierced holes and serves as a support for a very thin conductive foil (26).

15. Electron gun according to any one of the preceding Claims, characterized in that the grid (25) associated with the exit window is a support grid for a thin foil (26), said support grid having hollow bars through which a coolant flows.

16. Electron gun according to any one of the preceding Claims, characterized in that the exit window comprises two matching grids (25, 25S), which are positioned so as to support the thin foil which is sandwiched between them.

17. Electron gun according to any one of the preceding Claims, characterized in that at least one supplementary electrode (29-2) is provided between the extraction grid (29-1) and the high-voltage cathode (35), said supplementary electrode having an active portion which is geometrically similar to the extraction grid, which is parallel thereto, and which is maintained at a chosen potential between that of the extraction grid (29-1) and that of the high-voltage cathode (35).

18. Electron gun according to Claim 17, characterized in that the supplementary electrode or electrodes (29-2) is, or are, perforated (415-2) outside the active electrode portion, so as to permit gas pumping inside the high-voltage chamber (30-1, 30-2).

19. Electron gun according to Claim 18, characterized in that the high-voltage chamber (30) comprises a pumping port (410) which is located behind the cathode, facing the extraction grid and the intermediate electrode or electrodes.

20. Electron gun according to Claim 1 or any one of Claims 7 to 19, characterized in that the surfaces of the extraction grid (28, 29) and of the grid associated with the exit window (25, 26) are inclined relative to the high-voltage cathode, the shapes of these grids and the geometry of the electric field being such that all of the secondary electrons can return through the extraction grid and pass through the exit-window grid, at least some returning through holes other than those through which the ions passed.

21. Electron gun according to any one of the preceding Claims, characterized in that the ionization means (224, 225) comprise an anode filament (224) and means (18) of supplying electrical energy there-

to, said electrical supply means including an elastic portion (222) which enables filament elongation to be taken up.

22. Electron gun according to Claim 21, characterized in that the ionization means (224, 225) comprise a secondary filament (225) which functions as a triggering device.

23. Electron gun according to any one of the preceding Claims, characterized in that the cathode (35) is supported by an insulating tube (350), the duct (364) presented by the tube interior permitting the passing-through of the high-voltage supply connection (354, 356) and the through-flow of a coolant which returns via a duct (368) which is formed in the wall of this insulating tube.

24. Electron gun according to any one of the preceding Claims, characterized in that the extraction grid (29) and the exit-window support grid (26) are defined within solid pieces (202, 290) inside which a coolant can be circulated.

FIG. 1

# FIG. 2

FIG. 3A

FIG. 3B

FIG. 4A

FIG. 4B

# FIG. 5A

# FIG. 5B

# FIG. 6A

# FIG. 6B

$V \leqslant 80 \, kV$

$V \geqslant 100 \, kV$

FIG.7

FIG.8A

FIG.8B

FIG.9

## FIG. 10

25 (et 29)

DF

## FIG. 11

25    26

29    28

e

i

35

# FIG. 12